# FASCICULE DE BREVET EUROPEEN

(11) **EP 3 369 606 B1**
(45) Date de publication et mention de la délivrance du brevet: **20.02.2019**
(21) Numéro de dépôt: 18156579.7
(22) Date de dépôt: 13.02.2018
(51) Int. Cl.: B60M 1/00, G01B 5/00, G01B 5/14, G01B 3/04

(54) **DISPOSITIF DE MESURE DE L'ÉCARTEMENT DE DEUX CORPS PORTANT DES POULIES D'UN APPAREIL TENDEUR À MOUFLE D'UNE CATÉNAIRE**
VORRICHTUNG ZUM MESSEN DES ABSTANDS ZWISCHEN ZWEI ROLLENTRAGENDEN KÖRPERN EINES SPANNGERÄTS MIT FLASCHENZUG EINES TRAGSEILS
DEVICE FOR MEASURING THE SEPARATION OF TWO BODIES HAVING PULLEYS OF A BLOCK TENSIONING APPARATUS OF A CATENARY

(30) Priorité: 02.03.2017 FR 1751699
(43) Date de publication de la demande: 05.09.2018
(73) Titulaire: 4NRJ, 41330 Villefrancoeur (FR)
(72) Inventeur: Gasselin, Benoît, 41000 BLOIS (FR); Santerre, Paul, 45190 BEAUGENCY (FR)
(74) Mandataire: Gicquel, Frédéric

(56) Documents cités:
- FR-A- 1 485 334
- US-A- 2 928 178
- US-A- 4 562 743
- US-A- 5 161 312

## Description

Le domaine de l'invention est celui de la conception et de la fabrication d'équipements de maintenance ferroviaire.

Plus précisément l'invention concerne un dispositif permettant de contrôler un écartement entre deux corps portant des poulies d'un appareil tendeur à moufle destiné à tendre une caténaire.

Pour permettre un bon fonctionnement des caténaires de réseaux ferrés, ces caténaires doivent être maintenues tendues selon une tension adéquate.

Pour réaliser la mise en tension et le maintien en tension d'une caténaire, les appareils tendeurs à moufle sont connus.

Un appareil tendeur à moufle est fixé à une extrémité d'une caténaire et sert d'interface entre la caténaire et un poteau. L'appareil tendeur à moufle comporte deux corps qui sont reliés par un câble lesté. Chaque corps porte des poulies, et le câble lesté est enroulé autour de ces poulies.

Plus précisément, le câble lesté est enroulé autour des poulies et présente sur une extrémité un contrepoids. En conséquence, le contrepoids tend à rapprocher l'un contre l'autre les deux corps de l'appareil tendeur à moufle.

Ainsi, une caténaire est maintenue à une tension adéquate grâce à l'appareil tendeur à moufle qui transmet et démultiplie la force de tension exercée par le contrepoids.

Ces appareils tendeurs à moufle sont essentiels du fait que les caténaires sont sensibles aux conditions météorologiques.

Plus précisément, la température influe sur l'état de dilatation des caténaires ce qui tend à contracter la caténaire lorsque les températures baissent, ou à détendre la caténaire lorsque les températures remontent.

Lors d'une opération de maintenance, les agents de maintenance doivent pouvoir vérifier le bon réglage en tension de la caténaire. Pour effectuer une telle opération, l'écartement entre les deux corps mobiles d'un appareil tendeur à moufle doit être vérifié.

Pour réaliser ce contrôle, il est connu de l'art antérieur des règles montées à demeure sur l'appareil tendeur à moufle qui permettent ainsi de lire facilement à partir du sol l'écartement entre les deux corps de l'appareil tendeur.

Une telle règle est par exemple couplée sur un corps de l'appareil tendeur à moufle qui présente des poulies. Cette règle s'étend alors en direction de l'autre corps présentant l'autre partie des poulies. On retrouve aussi un guide à l'intérieur duquel la règle est insérée, ce guide étant porté par l'autre partie de l'appareil tendeur à moufle. La position de la règle à l'intérieur du guide pointe ainsi vers une mesure présentée par la règle.

De tel dispositif de mesure de l'écartement de deux corps d'un appareil tendeur à moufle présente néanmoins des inconvénients.

Selon un premier inconvénient, on peut noter que les conditions météorologiques, qui tendent à modifier la tension d'une caténaire, peuvent contrecarrer le fonctionnement du dispositif de mesure de l'écartement.

Plus précisément, en présence de température négative, la mobilité de la règle à l'intérieur du guide peut être compromise. En effet, de la glace peut se former sur une caténaire, sur le dispositif tendeur à moufle, ainsi que sur la règle, ce qui tend à perturber, voire à empêcher la bonne mise en tension par le contrepoids de la caténaire, le câble lesté n'arrivant pas alors à rapprocher les deux corps de l'appareil tendeur à moufle.

Par exemple, de la glace peut se former sur la règle et venir en butée contre le guide, empêchant alors la règle de coulisser à l'intérieur du guide, et par voie de conséquence empêchant les corps de se rapprocher ou de s'écarter.

De manière complémentaire, les conditions météorologiques et l'état de la caténaire peuvent créer un effort de torsion se répercutant sur la règle et sur le guide. Cet effort de torsion peut alors entraîner un désalignement de la règle par rapport à son guide, compliquant alors la lecture d'une mesure sur la règle et favorisant le phénomène précédemment décrit de blocage de la règle à l'intérieur de son guide.

On peut encore noter qu'en raison des contraintes pouvant apparaître (températures, tensions, efforts en torsion, ...), un flambage de la règle est possible, pouvant s'accompagner de la destruction du dispositif de mesure et/ou de l'appareil tendeur à moufle et/ou de la caténaire.

On peut également noter que les dispositifs de mesure de l'écartement entre les deux corps d'un appareil tendeur à moufle ne sont pas forcément adaptables sur un appareil tendeur à moufle qui n'aurait pas été conçu pour en présenter un.

Enfin, selon un dernier inconvénient, on peut noter que les dispositifs de mesure installés sur un appareil tendeur à moufle peuvent gêner les opérations de maintenance de l'appareil tendeur à moufle qui en est équipé.

L'invention a notamment pour objectif de palier les inconvénients de l'art antérieur.

Plus précisément, l'invention a pour objectif de proposer un dispositif de mesure de l'écartement entre deux corps portant des poulies d'un appareil tendeur à moufle d'une caténaire, dont le fonctionnement n'est pas, ou à tout le moins peu sensible aux conditions météorologiques.

L'invention a également pour objectif de proposer un tel dispositif de mesure qui puisse être adapté sur des appareils tendeurs à moufle qui ne sont pas prévus pour porter un tel dispositif de mesure.

L'invention a encore pour objectif de proposer un tel dispositif de mesure qui ne gêne pas les opérations de maintenance de l'appareil tendeur à moufle qu'il équipe.

Ces objectifs, ainsi que d'autres qui apparaîtront par la suite, sont atteints grâce à l'invention qui a pour objet un dispositif de mesure de l'écartement entre deux corps portant des poulies d'un appareil tendeur à moufle d'une caténaire, l'appareil tendeur à moufle comprenant :
- deux corps dont :
   - un premier corps portant des poulies, destiné à être couplé à une caténaire ;
   - un deuxième corps portant des poulies, destiné à être couplé à un support de caténaire ;
- un câble lesté couplé aux poulies de manière à tendre la caténaire,
le dispositif de mesure comportant :
- une règle solidaire de l'un des corps ;
- un organe de guidage et de mesure, complémentaire de la règle, solidaire de l'autre des corps, comportant une structure rigide qui présente une ouverture au travers de laquelle la règle coulisse, l'organe de guidage et de mesure étant destiné à pointer sur la règle une mesure d'écartement entre les deux corps ;
caractérisé en ce que l'organe de guidage et de mesure comporte des moyens flexibles de guidage de la règle, s'étendant à partir de la structure rigide et formant une interface entre la règle et l'ouverture.

De tels moyens flexibles de guidage de la règle sont particulièrement avantageux du fait qu'ils optimisent le fonctionnement du dispositif de mesure selon l'invention, quelles que soient les conditions météorologiques. En effet, dans le cas où de la glace se forme sur le dispositif de mesure, les moyens flexibles de guidage permettent une rupture plus aisée de la glace qui se serait formée à proximité et/ou sur la règle et sur le guide dans lequel la règle coulisse.

Du fait que l'ouverture formée par la structure rigide présente des moyens flexibles formant l'interface, cette ouverture a une section telle qu'il existe un jeu important entre la règle et la périphérie de l'ouverture. Aussi, si de relativement petites plaques de glace se forment sur la règle, ce jeu important permet à la règle de coulisser à l'intérieur de l'ouverture sans que la glace ne vienne former un point de blocage allant à l'encontre ce coulissement.

En conséquence, en évitant un blocage de la règle dans l'organe de guidage et de mesure, on évite un risque de flambage de la règle, voire au pire la destruction du dispositif de mesure et/ou de l'appareil tendeur à moufle et/ou de la caténaire.

Aussi, dans le cas d'une opération de maintenance sur la caténaire résultant de la forte présence de glace, il est possible que les agents réalisent une boucle de dégivrage.

Cette boucle de dégivrage consiste à mettre la caténaire en court-circuit. La température de la caténaire passe alors en quelques secondes dans des températures positives. Dans ce cas, le relâchement de l'appareil tendeur à moufle est soudain. Les moyens flexibles de guidage servent alors de fusible permettant d'offrir une protection à la règle.

Selon une caractéristique avantageuse, les moyens flexibles de guidage de la règle comprennent au moins deux éléments écartés l'un de l'autre de manière à présenter des espaces creux entre la règle et l'ouverture.

De tels espaces creux entre la règle et l'ouverture permettent, en cas de formation de glace entre la règle et la structure rigide présentant l'ouverture, la création de zones de rupture à l'intérieur du bloc de glace.

Avantageusement, les moyens flexibles de guidage sont répartis de manière à centrer la règle à l'intérieur de l'ouverture.

En centrant la règle à l'intérieur de l'ouverture, les moyens flexibles de guidage optimisent la capacité de la règle à coulisser à l'intérieur de l'ouverture, et ce même en présence de plaques de glace le long de la règle. Ce centrage, permet aussi, dans une certaine mesure de contribuer à compenser des efforts en torsion existants entre les deux corps de l'appareil tendeur à moufle.

Selon une variante de réalisation préférée :
- l'ouverture présente une forme rectangulaire ;
- les moyens flexibles de guidage comportent quatre éléments, chaque élément étant situé à l'un des coins de l'ouverture.

Cette variante de réalisation permet de minimiser le contact des moyens flexibles de guidage avec la règle afin d'éviter une fusion des moyens flexibles de guidage avec la règle par le biais de la glace.

Selon un mode de réalisation préférentiel, les moyens flexibles de guidage de la règle prennent la forme de dents.

De telles dents viennent en contact avec la règle en présentant une surface de contact minimisée et sont adaptées à supporter les contraintes s'exerçant à l'interface entre la règle et l'ouverture.

Selon une variante préférentielle de réalisation, la règle est solidaire d'un des corps au moyen d'une liaison présentant un jeu susceptible d'autoriser un débattement partiel entre la règle et le corps sur lequel la règle est solidarisée.

Un tel débattement partiel entre la règle et son support de règle permet de conférer au dispositif la capacité d'accepter un défaut d'alignement entre la règle et le l'organe de guidage et de mesure situé sur l'autre corps.

Selon un mode de réalisation préféré, la règle est solidaire de l'un des corps par l'intermédiaire d'un support de règle, et l'organe de guidage et de mesure comporte un support de la structure rigide, le support de règle et/ou le support de la structure rigide comportant :
- une partie de fixation au premier corps ou au deuxième corps ;
- une partie orientable destinée à porter la règle ou à porter la structure rigide ;
la partie de fixation et la partie orientable étant couplées ensemble par l'intermédiaire d'une liaison pivot présentant un axe de pivotement sensiblement parallèle à l'axe dans lequel s'étend la caténaire.

Une telle liaison pivot permet d'adapter avantageusement l'inclinaison de la règle et/ou de la structure rigide de l'organe de guidage et de mesure en fonction des conditions météorologiques, de la situation de la caténaire, et des efforts en torsion s'exerçant sur la caténaire et sur le dispositif tendeur à moufle.

Selon un premier mode de réalisation avantageux, la règle et l'organe de guidage et de mesure sont solidaires respectivement de l'un et l'autre des corps en étant chacun couplé sur un écrou d'une des poulies desdits corps.

Grâce à cette caractéristique, le dispositif de mesure selon l'invention peut être équipé à postériori sur un appareil tendeur à moufle qui n'aurait pas été conçu pour emporter un.

Aussi, en étant installé sur des écrous des poulies présentées par des corps, le dispositif de mesure selon l'invention ne nécessite pas une préparation préalable contraignante des deux corps de l'appareil tendeur à moufle (perçage ou soudure des corps).

Selon un mode de réalisation préférentiel, la règle et l'organe de guidage et de mesure sont couplés sur la périphérie desdits écrous et s'étendent en côté desdits écrous de manière à ne pas obstruer une face extérieure desdits écrous.

Selon ce mode de réalisation, des opérations de maintenance sur l'appareil tendeur à moufle ne sont pas empêchées par la présence du dispositif de mesure selon l'invention.

En effet, des agents de maintenance effectuent souvent des opérations de maintenance à partir du sol. Les agents de maintenance utilisent alors des perches équipées d'embouts spécifiques venant coopérer avec le dispositif tendeur à moufle. Des dispositifs de mesure classiques de l'écartement équipant l'appareil tendeur à moufle, de par leurs positions sur l'appareil, peuvent alors former un obstacle à la bonne réalisation d'une opération de maintenance.

Au contraire, grâce à cette conception du dispositif de mesure selon l'invention, le graissage des axes de poulies n'est pas empêché par la présence du dispositif. Plus précisément, les écrous du dispositif tendeur à moufle peuvent avoir une conception permettant de coupler un appareil de maintenance injectant de la graisse à travers de cet écrou à l'intérieur de l'axe. Ainsi, en étant couplé en périphérie, l'appareil de maintenance qui injecte de la graisse peut tout de même venir en contact avec la face extérieure des écrous.

Selon une caractéristique préférée, le dispositif de mesure comporte des moyens de blocage en rotation des écrous.

De tels moyens de blocage en rotation des écrous permettent d'éviter que les écrous supportant le dispositif de mesure selon l'invention ne se dévissent sous l'effort et/ou les contraintes résultant de la présence du dispositif de mesure.

Selon un deuxième mode de réalisation avantageux, la règle et/ou l'organe de guidage et de mesure sont chacun solidaires respectivement de l'un et l'autre des corps par l'intermédiaire :
- d'au moins un crochet de fixation supérieur destiné à reposer sur une face supérieure dudit corps ;
- d'un organe de serrage inférieur destiné à exercer une pression sur une face inférieure dudit corps en opposition au crochet de fixation supérieur par rapport au corps.

Un tel système d'accroche forme une griffe qui permet une mise en place aisée du dispositif de mesure selon l'invention.

Ce système offre également un maintien résistant aux intempéries, au vieillissement et aux vibrations dues aux passages des trains.

Ce système permet également d'appliquer un serrage plus important par rapport à celui où il y a un maintien en périphérie des écrous. En effet, l'organe de serrage permet de brider le crochet de fixation supérieur sur le corps.

Préférentiellement, le crochet de fixation supérieur présente :
- une surface de contact droite destinée à reposer sur le premier corps ou sur le deuxième corps ;
- une surface de contact oblique prolongeant la surface de contact droite, la surface de contact oblique étant destinée à retenir la règle et/ou l'organe de guidage et de mesure en cas de desserrage de l'organe de serrage inférieur.

Grâce à cette forme du crochet de fixation supérieur, en cas de desserrage, la règle et/ou l'organe de guidage et de mesure reste en position pendant une courte durée sans tomber.

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés parmi lesquels :
- les figures 1 et 2 sont des représentations schématiques d'un appareil tendeur à moufle d'une caténaire équipée d'un dispositif de mesure selon l'invention, présentant deux écartements différents ;
- la figure 3 est une représentation schématique de la partie du dispositif de mesure selon l'invention présentant le support de règle solidarisant la règle à un corps d'un appareil tendeur à moufle ;
- la figure 4 est une représentation schématique de la règle et de l'organe de guidage et de mesure du dispositif de mesure selon l'invention ;
- la figure 5 est une représentation schématique de l'organe de guidage et de mesure du dispositif de mesure selon l'invention ;
- les figures 6a et 6b sont des représentations schématiques de crochets de fixation supérieurs accrochés sur des corps de largeurs différentes ;
- la figure 7 est une représentation schématique d'un organe de serrage inférieur.

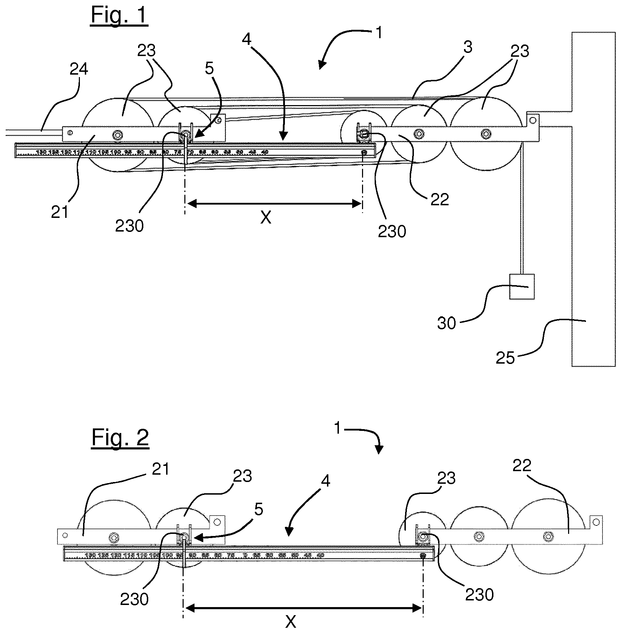

Tel qu'illustré par la figure 1, un appareil tendeur à moufle permet de tendre une caténaire selon une tension prédéterminée, à un support de caténaire 25.

L'appareil tendeur à moufle comprend :
- deux corps dont :
   - un premier corps 21 portant des poulies 23, destiné à être couplé à la caténaire 24 ;
   - un deuxième corps 22 portant des poulies, destiné à être couplé au support de caténaire 25 ;
   - un câble lesté.

Le câble lesté 3 est couplé à chacune des poulies portées par les corps, et permet de tendre la caténaire. En effet, le câble est couplé à une extrémité à un corps de l'appareil tendeur à moufle et à une autre extrémité à un contrepoids 30 qui pend le long du support de caténaire.

En référence aux figures 1 et 2, les deux corps peuvent présenter un écartement variable. Cet écartement peut être représenté par une mesure X qui représente l'écartement existant entre l'axe de deux poulies portées chacune sur l'un des corps.

Le dispositif de mesure 1 selon l'invention permet de mesurer l'écartement entre les deux corps.

Ce dispositif de mesure comporte une règle 4 et un organe de guidage et de mesure 5. L'organe de guidage et de mesure est complémentaire de la règle.

La règle 4 est solidaire de l'un des corps. En l'occurrence, la règle 4 est solidaire du deuxième corps 22.

L'organe de guidage et de mesure 5, quant à lui, est solidaire de l'autre des corps. En l'occurrence, cet organe de guidage et de mesure est solidaire du premier corps 21.

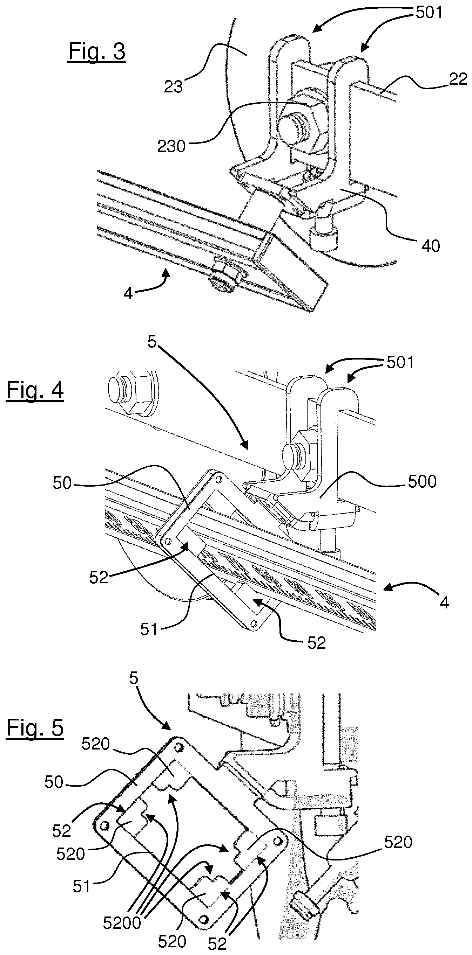

En référence aux figures 4 et 5, l'organe de guidage et de mesure 5 coopère avec la règle 4 au moyen d'une ouverture 51, présentée par une structure rigide 50, au travers de laquelle la règle coulisse.

Un agent effectuant une opération d'entretien peut ainsi mesurer l'écartement entre les deux corps en regardant une distance pointée par l'organe de guidage et de mesure sur la règle. Plus précisément, l'emplacement de l'ouverture par rapport à la règle indique la mesure d'écartement correspondant à X.

Tel que l'on peut l'observer sur la figure 3, la règle 4 est solidaire du deuxième corps par l'intermédiaire d'un support de règle 40.

Selon la figure 4, on observe que la structure rigide 50, qui présente l'ouverture 51, est solidaire du premier corps par l'intermédiaire d'un support de la structure rigide 500.

Selon le mode de réalisation illustré par les figures 3 et 4, le support de règle et le support de la structure rigide sont identiques. Ces supports comportent chacun un bras incliné qui permettent à la règle et à l'ouverture d'être inclinés pour faciliter la lecture de la mesure pointée sur la règle par l'organe de guidage et de mesure.

Préférentiellement, la face de la règle présentant les mesures est destinée à présenter un angle d'environ 45° par rapport à un axe vertical.

Selon le présent mode de réalisation illustré par les figures 3, 4, 6a, 6b et 7, la règle 4 et l'organe de guidage et de mesure 5 sont chacun solidaires respectivement de l'une et l'autre des corps par l'intermédiaire :
- de deux crochets de fixation supérieurs 501 destinés à reposer sur une face supérieure dudit corps ;
- d'un organe de serrage inférieur 504 destiné à exercer une pression sur une face inférieure dudit corps en opposition au crochet de fixation supérieur par rapport au corps.

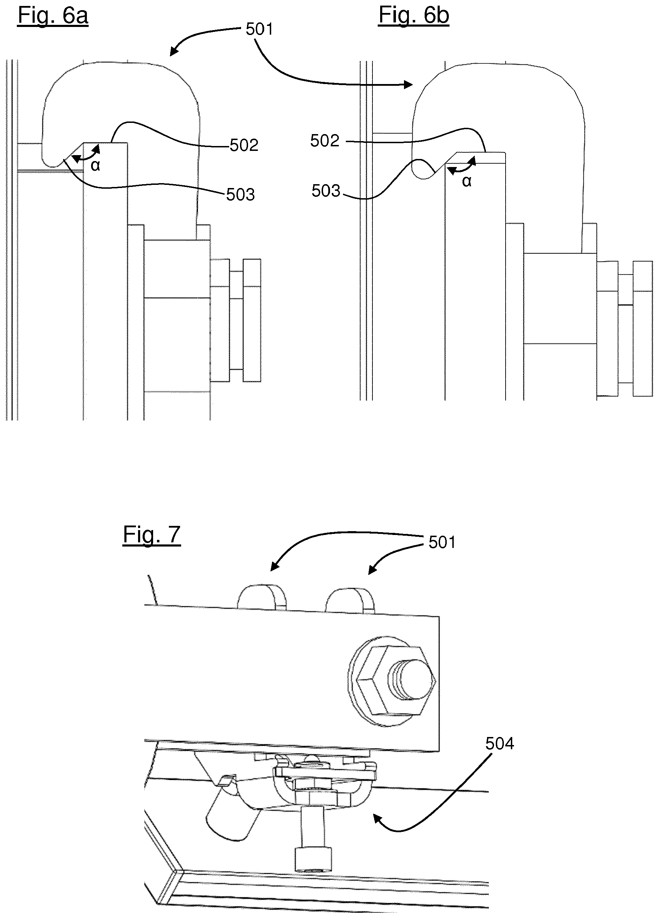

Tel qu'illustré par les figures 6a et 6b, les crochets de fixation supérieurs 501 présentent une surface de contact droite 502 prolongée par une surface de contact oblique 503. Plus précisément, la surface de contact oblique et la surface de contact droite forment ensemble un angle a inférieur à 180° et supérieur à 90°, et en l'occurrence cet angle a a une valeur de 135°. Cet angle confère une forme de griffe et une capacité de crochetage aux crochets de fixation supérieurs.

En référence à la figure 6a, la surface de contact droite 502 est destinée à reposer sur la tranche supérieure du premier ou du deuxième corps qui présente par exemple une largeur de 8 mm. La surface de contact oblique 503, quant à elle, est destinée à retenir la règle et/ou l'organe de guidage et de mesure en cas de desserrage de l'organe de serrage inférieur. Cette surface de contact oblique forme ainsi une pente antichute

Dans la situation illustrée par la figure 6b, la largeur du corps est plus importante (10 mm). En conséquence, la surface de contact droite ne peut pas reposer sur la tranche supérieure du premier ou du deuxième corps. La surface de contact oblique permet cependant de compenser cette situation en faisant office de crochet.

En référence à la figure 7, l'organe de serrage inférieur 504 exerce une action complémentaire de celle des crochets de fixation supérieurs. Cet organe de serrage inférieur comporte préférentiellement une vis à bille dont le serrage bride le crochet de fixation supérieur sur le corps.

Préférentiellement, l'organe de serrage inférieur comporte un écrou frein pour éviter ou à tout le moins retarder un desserrage non désiré.

En référence aux figures 3 et 4, les poulies sont mobiles en rotation sur les corps autour d'axe qui présente à leur extrémité des écrous 230. Ces écrous sont ainsi situés sur des faces latérales des corps.

Selon le présent mode de réalisation, la règle 4 et l'organe de guidage et de mesure 5 sont couplés sur la périphérie des écrous 230.

Plus précisément, les deux crochets de fixation supérieurs 501 sont situés de part et d'autre de l'écrou, en contact avec ce dernier. Grâce à ce positionnement, les crochets ne peuvent coulisser sur les corps.

Cette règle 4 et l'organe de guidage et de mesure 5 s'étendent également en côté des écrous de manière à ne pas obstruer une face extérieure des écrous. En d'autres termes, l'espace situé en face de l'écrou est laissé libre par le dispositif de mesure de l'écartement selon l'invention.

La face extérieure des écrous étant libre et non obstruée, une opération de maintenance, utilisant cet écrou et plus précisément la face extérieure de cet écrou peut être réalisée.

Par exemple, l'écrou présente un organe de graissage de l'axe de la poulie, qui est situé sur la face extérieure de l'écrou. Un moyen de graissage peut ainsi être couplé sur l'organe de graissage.

Selon un autre mode de réalisation non représenté, le support de règle et le support de la structure rigide présentent des composants communs et comportent :
- une partie de fixation au premier corps ou au deuxième corps ;
- une partie orientable destinée à porter la règle ou à porter la structure rigide.

La partie de fixation et la partie orientable sont couplées ensemble par l'intermédiaire d'une liaison pivot qui présente un axe de pivotement destiné à être sensiblement parallèle à l'axe dans lequel se tend la caténaire.

Toujours selon ce mode de réalisation non représenté, la règle et l'organe de guidage et de mesure sont solidaires de respectivement l'un et l'autre des corps en étant chacun couplé sur un écrou d'une des poulies desdits corps.

Cette butée de blocage en rotation vient prendre appui sur une face des corps de l'appareil tendeur à moufle, et permet d'empêcher le dévissage des écrous sous l'effet des efforts et des contraintes résultant de la présence du dispositif de mesure de l'écartement selon l'invention.

Selon ce mode de réalisation, les parties de fixation entourent les écrous. En côté des écrous, chaque partie de fixation présente une première partie d'une charnière destinée à coopérer avec une deuxième partie complémentaire de la charnière présentée par la partie orientable correspondante.

Ces parties orientables sont plus précisément des platines aptes à être couplées soit avec une structure rigide d'un organe de guidage et de mesure, soit avec une tige qui traverse la platine et la règle pour les assembler ensemble.

La tige est couplée à une extrémité à la partie orientable, et à une autre extrémité à la règle.

Dans ce mode de réalisation, le dispositif de mesure selon l'invention comporte également des moyens de blocage en rotation des écrous. Ces moyens de blocage en rotation sont plus précisément formés par une butée de blocage en rotation montée sur les axes de pivotement présentés par les liaisons pivot des parties des fixations et des parties orientables.

Selon une caractéristique avantageuse non représentée, la règle peut être couplée à la tige en étant située entre deux rondelles convexes. Ces deux rondelles convexes coopèrent avec la règle de manière à former une liaison qui présente un jeu susceptible d'autoriser un débattement partiel entre la règle et la tige, et ainsi entre la règle et le corps sur lequel la règle est solidarisée.

Tel que l'on peut l'observer sur les figures 4 et 5, l'organe de guidage et de mesure 5 comporte des moyens flexibles de guidage 52 de la règle 4. Ces moyens flexibles de guidage s'étendent à partir de la structure rigide 50 et forment une interface entre la règle et l'ouverture 51.

Tel qu'illustré schématiquement sur la figure 4, les moyens flexibles de guidage 52 empêchent la règle 4 de venir en contact avec la structure rigide qui forme l'ouverture 51.

Ces moyens flexibles de guidage 52 (les éléments) prennent la forme de dents 520. Ces dents (ou éléments) sont écartées les unes des autres de manière à présenter des espaces creux entre la règle et l'ouverture.

Tel que l'on peut l'observer sur la figure 5, les dents 520 sont réparties de manière à centrer la règle 4 à l'intérieur de l'ouverture 51.

Selon le présent mode de réalisation :
- l'ouverture 51 présente une forme rectangulaire,
- la règle présente une section rectangulaire.

Les moyens flexibles de guidage 52 comportent alors quatre éléments, chaque élément étant situé à l'un des coins de l'ouverture.

Plus précisément les dents 520 sont réparties de manière à venir en contact sur des coins de la règle, en optimisant le placement de la règle à l'intérieur de l'ouverture. Aussi, les dents présentent avantageusement des entailles 5200 destinées à coopérer avec les coins de la section rectangulaire de la règle.

Les dents 520 sont formées par une membrane en caoutchouc. Il s'agit d'un caoutchouc EPDM (éthylène-propylène-diène monomère), résistant aux UV et conçu pour présenter une durée de vie d'au moins 15 ans.

Cette membrane est plus précisément maintenue en position par la structure rigide 50 qui est constituée de deux mâchoires en acier inoxydable.

La forme de la membrane en caoutchouc permet d'avoir le moins de contact possible avec la règle tout en optimisant son guidage. De cette manière, une fusion de la règle avec la structure rigide par le biais de la glace est évitée.

L'épaisseur et la taille des dents sont calibrées pour permettre, dans le cas de la formation de glace au niveau de l'ouverture, le cambrage de la membrane de manière à rompre la glace et autoriser le déplacement de la règle.

## Revendications

1. Dispositif de mesure (1) de l'écartement entre deux corps portant des poulies d'un appareil tendeur à moufle d'une caténaire, l'appareil tendeur à moufle comprenant :
- deux corps dont :
- un premier corps (21) portant des poulies (23), destiné à être couplé à une caténaire (24) ;
- un deuxième corps (22) portant des poulies, destiné à être couplé à un support de caténaire (25) ;
- un câble lesté (3) couplé aux poulies de manière à tendre la caténaire,
le dispositif de mesure comportant :
- une règle (4) solidaire de l'un des corps ;
- un organe de guidage et de mesure (5), complémentaire de la règle, solidaire de l'autre des corps, comportant une structure rigide (50) qui présente une ouverture (51) au travers de laquelle la règle coulisse, l'organe de guidage et de mesure étant destiné à pointer sur la règle une mesure d'écartement entre les deux corps ;
**caractérisé en ce que** l'organe de guidage et de mesure comporte des moyens flexibles de guidage (52) de la règle, s'étendant à partir de la structure rigide et formant une interface entre la règle et l'ouverture.

2. Dispositif de mesure (1) selon la revendication 1, **caractérisé en ce que** les moyens flexibles de guidage (52) de la règle (4) comprennent au moins deux éléments écartés l'un de l'autre de manière à présenter des espaces creux entre la règle et l'ouverture (51).

3. Dispositif de mesure (1) selon l'une quelconque des revendications précédentes, **caractérisé en ce que** les moyens flexibles de guidage (52) sont répartis de manière à centrer la règle (4) à l'intérieur de l'ouverture (51).

4. Dispositif de mesure (1) selon la revendication 3, **caractérisé en ce que** :
- l'ouverture (51) présente une forme rectangulaire ;
- les moyens flexibles de guidage (52) comportent quatre éléments, chaque élément étant situé à l'un des coins de l'ouverture.

5. Dispositif de mesure (1) selon l'une quelconque des revendications précédentes, **caractérisé en ce que** les moyens flexibles de guidage (52) de la règle (4) prennent la forme de dents (520).

6. Dispositif de mesure (1) selon l'une quelconque des revendications précédentes, **caractérisé en ce que** la règle (4) est solidaire d'un des corps au moyen d'une liaison présentant un jeu susceptible d'autoriser un débattement partiel entre la règle et le corps sur lequel la règle est solidarisée.

7. Dispositif de mesure (1) selon l'une quelconque des revendications précédentes, **caractérisé en ce que** la règle (4) et/ou l'organe de guidage et de mesure (5) sont chacun solidaires respectivement de l'un et l'autre des corps par l'intermédiaire :
- d'au moins un crochet de fixation supérieur (501) destiné à reposer sur une face supérieure dudit corps ;
- d'un organe de serrage inférieur (504) destiné à exercer une pression sur une face inférieure dudit corps en opposition au crochet de fixation supérieur par rapport au corps.

8. Dispositif de mesure (1) selon la revendication 7, **caractérisé en ce que** le crochet de fixation supérieur (501) présente :
- une surface de contact droite (502) destinée à reposer sur le premier corps ou sur le deuxième corps ;
- une surface de contact oblique (503) prolongeant la surface de contact droite, la surface de contact oblique étant destinée à retenir la règle (4) et/ou l'organe de guidage et de mesure (5) en cas de desserrage de l'organe de serrage inférieur.

## Patentansprüche

1. Vorrichtung zum Messen (1) des Abstands zwischen zwei Körpern, die Riemenscheiben eines Flaschenzug-Spannapparats einer Fahrleitung tragen, wobei der Flaschenzug-Spannapparat umfasst:
- zwei Körper, darunter:
- einen ersten Körper (21), der Riemenscheiben (23) trägt, der dazu bestimmt ist, mit einer Fahrleitung (24) gekoppelt zu werden;
- einen zweiten Körper (22), der Riemenscheiben trägt, der dazu bestimmt ist, mit einem Fahrleitungshalter (25) gekoppelt zu werden;
- ein mit Ballast beladenes Kabel (3), das so mit den Riemenscheiben gekoppelt ist, um die Fahrleitung zu spannen,
wobei die Vorrichtung zum Messen Folgendes beinhaltet:
- einen Maßstab (4), der fest mit einem der Körper verbunden ist;
- ein Organ zum Führen und Messen (5), ergänzend zum Maßstab, das fest mit dem anderen der Körper verbunden ist, eine starre Struktur (50) beinhaltend, die eine Öffnung (51) aufweist, durch die der Maßstab gleitet, wobei das Organ zum Führen und Messen dazu bestimmt ist, auf dem Maßstab eine Abstandsmessung zwischen den beiden Körpern anzuzeigen;
**dadurch gekennzeichnet, dass** das Organ zum Führen und Messen flexible Mittel zur Führung (52) des Maßstabs beinhaltet, die sich aus der starren Struktur erstrecken und eine Schnittstelle zwischen dem Maßstab und der Öffnung bilden.

2. Vorrichtung zum Messen (1) nach Anspruch 1, **dadurch gekennzeichnet, dass** die flexiblen Mittel zur Führung (52) des Maßstabs (4) mindestens zwei Elemente umfassen, die so voneinander beabstandet sind, um Hohlräume zwischen dem Maßstab und der Öffnung (51) aufzuweisen.

3. Vorrichtung zum Messen (1) nach einem der vorstehenden Ansprüche, **dadurch gekennzeichnet, dass** die flexiblen Mittel zur Führung (52) so verteilt sind, um den Maßstab (4) im Inneren der Öffnung (51) zu zentrieren.

4. Vorrichtung zum Messen (1) nach Anspruch 3, **dadurch gekennzeichnet, dass**:
- die Öffnung (51) eine rechteckige Form aufweist;
- die flexiblen Mittel zur Führung (52) vier Elemente beinhalten, wobei sich jedes Element an einer der Ecken der Öffnung befindet.

5. Vorrichtung zum Messen (1) nach einem der vorstehenden Ansprüche, **dadurch gekennzeichnet, dass** die flexiblen Mittel zur Führung (52) des Maßstabs (4) die Form von Zähnen (520) annehmen.

6. Vorrichtung zum Messen (1) nach einem der vorstehenden Ansprüche, **dadurch gekennzeichnet, dass** der Maßstab (4) anhand einer Verbindung fest mit einem der Körper verbunden ist, die ein Spiel aufweist, das geeignet ist, einen Teilausschlag zwischen dem Maßstab und dem Körper zu erlauben, an dem der Maßstab fest angebracht ist.

7. Vorrichtung zum Messen (1) nach einem der vorstehenden Ansprüche, **dadurch gekennzeichnet, dass** der Maßstab (4) und/oder das Organ zum Führen und Messen (5) jeweils fest mit dem jeweils einen und dem anderen der Körper verbunden ist, anhand:
- mindestens eines oberen Befestigungshakens (501), der dazu bestimmt ist, auf einer oberen Seite des Körpers aufzuliegen;
- eines unteren Klemmorgans (504), das dazu bestimmt ist, einen Druck auf eine untere Seite des Körpers entgegengesetzt zum oberen Befestigungshaken im Verhältnis zum Körper auszuüben.

8. Vorrichtung zum Messen (1) nach Anspruch 7, **dadurch gekennzeichnet, dass** der obere Befestigungshaken (501) aufweist:
- eine gerade Kontaktoberfläche (502), die dazu bestimmt ist, auf dem ersten Körper oder auf dem zweiten Körper aufzuliegen;
- eine schräge Kontaktoberfläche (503), die die gerade Kontaktoberfläche verlängert, wobei die schräge Kontaktoberfläche dazu bestimmt ist, den Maßstab (4) und/oder das Organ zum Führen und Messen (5) im Falle einer Lösung des unteren Klemmorgans zurückzuhalten.

## Claims

1. Device (1) for measuring the separation between two bodies carrying pulleys of pulley-block type tensioning apparatus of a catenary, the pulley-block type tensioning apparatus comprising:
- two bodies including:
-- a first body (21) carrying pulleys (23), intended to be coupled to a catenary (24);
-- a second body (22) carrying pulleys, intended to be coupled to a catenary support (25);
- a ballasted cable (3) coupled to a pulley so as to tension the catenary,
the measuring device comprising:
- a rule (4) secured to one of the bodies;
- a guidance and measuring member (5), complementary to the rule, secured to the other one of the bodies, comprising a rigid structure (50) that has an opening (51) through which the rule slides, the guidance and measuring member being intended to point on the rule to a measurement of separation between the two bodies; **characterised in that** the guidance and measuring member comprises flexible means (52) for guiding the rule, extending from the rigid structure and forming an interface between the rule and the opening.

2. Measuring device (1) according to claim 1, **characterised in that** the flexible means (52) for guiding the rule (4) comprise at least two elements separated from one another so as to have hollow spaces between the rule and the opening (51).

3. Measuring device (1) according to any of the preceding claims, **characterised in that** the flexible guidance means (52) are distributed so as to centre the rule (4) in the opening (51).

4. Measuring device (1) according to claim 3, **characterised in that**:
- the opening (51) has a rectangular shape;
- the flexible guidance means (52) comprise four elements, each element being situated at one of the corners of the opening.

5. Measuring device (1) according to any of the preceding claims, **characterised in that** the flexible means (52) for guiding the rule (4) take the form of teeth (520).

6. Measuring device (1) according to any of the preceding claims, **characterised in that** the rule (4) is secured to one of the bodies by means of a connection having play able to allow partial movement between the rule and the body to which the rule is secured.

7. Measuring device (1) according to any of the preceding claims, **characterised in that** the rule (4) and/or the guidance and measuring member (5) are each secured respectively to each of the bodies by means of:
- at least one top fixing hook (501) intended to rest on a top face of said body;
- a bottom clamping member (504) intended to exert a pressure on a bottom face of said body in opposition to the top fixing hook with respect to the body.

8. Measuring device (1) according to claim 7, **characterised in that** the top fixing hook (501) has:
- a straight contact surface (502) intended to rest on the first body or on the second body;
- an oblique contact surface (503) extending the straight contact surface, the oblique contact surface being intended to hold the rule (4) and/or the guidance and measuring member (5) in the event of unclamping of the bottom clamping member.
